# FASCICULE DE BREVET EUROPEEN

(11) **EP 3 688 896 B1**
(45) Date de publication et mention de la délivrance du brevet: **11.05.2022**
(21) Numéro de dépôt: 18752509.2
(22) Date de dépôt: 16.08.2018
(51) Int. Cl.: H04H 40/90, G06Q 20/32

(54) **DISPOSITIF DE RÉCEPTION DE SIGNAUX CAPTÉS PAR UNE ANTENNE SATELLITE**
VORRICHTUNG ZUM EMPFANGEN VON SIGNALEN, DIE VON EINER SATELLITENANTENNE ERFASST WURDEN
DEVICE FOR RECEIVING SIGNALS CAPTURED BY A SATELLITE ANTENNA

(30) Priorité: 28.09.2017 FR 1759037
(43) Date de publication de la demande: 05.08.2020
(73) Titulaire: Sagemcom Broadband SAS, 92500 Rueil-Malmaison (FR)
(72) Inventeur: DEJARDIN, Romain, 92500 Rueil Malmaison (FR); LEVECQUE, Eric, 92500 Rueil Malmaison (FR)
(74) Mandataire: Lavaud, Thomas
(86) Numéro de dépôt international: PCT/EP2018/072195
(87) Numéro de publication internationale: WO 2019/063191

(56) Documents cités:
- WO-A2-2017/149526
- US-A1- 2009 167 465

## Description

L'invention concerne le domaine des dispositifs de réception de signaux captés par une antenne satellite.

### ARRIERE PLAN DE L'INVENTION

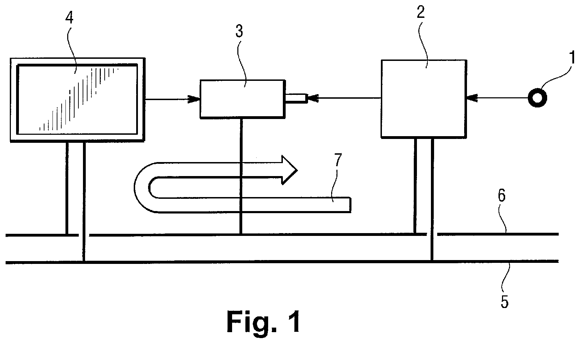

En référence à la figure 1, une installation de télévision par satellite comporte, d'amont en aval, une antenne satellite 1, un réseau de distribution 2, un boîtier décodeur 3 et une télévision 4.

Une tête universelle, aussi appelée tête LNB (pour *Low-Noise Block converter,* en anglais) est montée sur l'antenne satellite 1. La tête universelle est alimentée et pilotée par le boîtier décodeur 3. La tête universelle met en forme des signaux captés par l'antenne satellite 1 et les transpose dans une bande de réception prédéfinie, typiquement comprise entre 950MHz et 2350MHz.

Le réseau de distribution 2 comporte classiquement un câble coaxial qui relie la tête universelle au boîtier décodeur 3. Le boîtier décodeur 3 et la télévision 4 sont reliés par un câble de transmission numérique, par exemple par un câble HDMI, par un câble USB, par un câble Ethernet, etc.

Le réseau de distribution 2 peut être un réseau de distribution individuel, comme c'est le cas sur la figure 1, mais aussi un réseau de distribution collectif. Dans un réseau de distribution collectif, on trouve par exemple une tête universelle à plusieurs sorties reliées à une pluralité de boîtiers décodeurs.

Généralement, le réseau de distribution 2 et l'antenne satellite 1 sont reliés à la terre 5 et au réseau électrique basse tension 6, tout comme la télévision 4. La terre 5 à laquelle sont reliés le réseau de distribution 2 et l'antenne satellite 1, et la terre 5 à laquelle est reliée la télévision 4, peuvent parfois présenter des différences de potentiels importantes.

Le boîtier décodeur 3, quant à lui, n'est habituellement pas relié à la terre.

Ainsi, lorsque le boîtier décodeur 3 est connecté au réseau de distribution 2, puis lorsque le boîtier décodeur 3 est connecté à la télévision 4, les masses électriques de la télévision 4, du boîtier décodeur 3 et des équipements du réseau de distribution 2 sont mises au même potentiel via le câble de transmission numérique. On produit ainsi des boucles de masse 7. Les différences de potentiels importantes évoquées plus tôt génèrent d'importants courants qui peuvent détruire certains composants du boîtier décodeur 3 ou bien échauffer les connecteurs des câbles composant les boucles de masse 7 (et notamment, les connecteurs du câble de transmission numérique).

En outre, dans certains pays, le réseau électrique est parfois agencé de sorte qu'une rupture de neutre d'une ligne électrique du réseau électrique peut générer des courants importants dans les masses électriques. Ces courants importants peuvent à nouveau détruire certains composants du boîtier décodeur 3, échauffer les connecteurs des câbles, voire même provoquer par échauffement une dégradation du boîtier décodeur 3 visible de l'extérieur.

Un document valable de l'art antérieur est représenté par US2009/167465.

### OBJET DE L'INVENTION

L'invention a pour objet d'améliorer la protection d'un dispositif de réception de signaux captés par une antenne satellite contre les phénomènes qui viennent d'être décrits.

### RESUME DE L'INVENTION

En vue de la réalisation de ce but, on propose un dispositif de réception de signaux captés par une antenne satellite, comprenant un circuit frontal destiné à être connecté à une tête universelle montée sur l'antenne satellite et un circuit numérique destiné à être connecté à un équipement de destination, le circuit frontal et le circuit numérique étant isolés galvaniquement l'un par rapport à l'autre par des moyens d'isolation, le circuit frontal comportant une première masse électrique, un port d'entrée agencé pour recevoir des signaux d'entrée provenant de la tête universelle, un composant d'alimentation de tête universelle, et un module de sortie d'une alimentation à découpage du composant d'alimentation de tête universelle, le circuit numérique comprenant une deuxième masse électrique, un port de sortie, des composants de réception agencés pour acquérir les signaux d'entrée, pour les transformer en signaux de sortie et pour appliquer les signaux de sortie sur le port de sortie, un module d'entrée de l'alimentation à découpage, et un composant de commande agencé pour produire des signaux de commande à destination du composant d'alimentation de tête universelle.

Le circuit frontal et le circuit numérique sont donc isolés galvaniquement l'un par rapport à l'autre, et la première masse électrique et la deuxième masse électrique sont distinctes et indépendantes l'une de l'autre.

On bloque ainsi le phénomène de boucle de masse qui vient d'être décrit. On protège par ailleurs le circuit numérique et les câbles et équipements situés en aval du dispositif de réception contre des pics de courants ou des surtensions provenant de l'antenne satellite, de la tête universelle, du réseau de distribution ou du réseau électrique.

On propose aussi un boîtier décodeur comprenant un dispositif de réception semblable à celui qui vient d'être décrit.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente une installation de télévision par satellite de l'art antérieur ;
- la figure 2 représente un dispositif de réception selon l'invention.

### DESCRIPTION DETAILLEE DE L'INVENTION

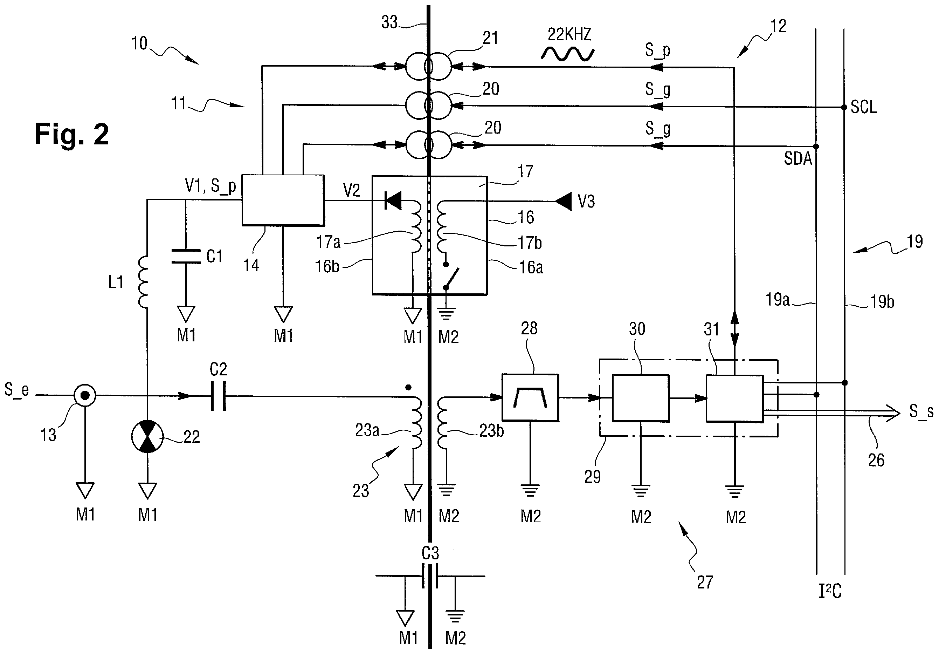

En référence à la figure 2, le dispositif de réception selon l'invention 10 est ici intégré dans un boîtier décodeur.

Le boîtier décodeur est relié par un câble coaxial à une tête universelle elle-même montée sur une antenne satellite. L'antenne satellite capte des signaux émis par un satellite, qui contiennent ici des programmes de télévision.

Le boîtier décodeur est un décodeur de télévision à la norme satellite DVB-S, DVB-S2 ou DVB-S2X.

Le boîtier décodeur est ici relié à une télévision par un câble HDMI.

Le boîtier décodeur reçoit des signaux d'entrée S_e provenant de la tête universelle, et transforme les signaux d'entrée S_e en signaux de sortie S_s à destination de la télévision.

Les signaux de sortie S_s sont ici des signaux de télévision numérique transmis selon le protocole TS-MPEG.

Le dispositif de réception 10 comporte un circuit frontal 11 et un circuit numérique 12, qui sont séparés par le trait épais 33 sur la figure 2.

Le circuit frontal 11 est connecté à la tête universelle. Le circuit numérique 12 est connecté à la télévision.

Le circuit frontal 11 et le circuit numérique 12 sont isolés galvaniquement l'un par rapport à l'autre : aucun élément conducteur ne relie le circuit frontal 11 et le circuit numérique 12.

Le circuit frontal 11 comporte une première masse électrique M1 à laquelle sont référencés tous les composants du circuit frontal 11. Le circuit numérique 12 comporte une deuxième masse électrique M2 à laquelle sont référencés tous les composants du circuit numérique 12.

La première masse électrique M1 comprend un premier plan de masse du dispositif de réception 10. La deuxième masse électrique M2 comprend un deuxième plan de masse du dispositif de réception 10.

Le circuit frontal 11 comporte de plus un port d'entrée 13 relié à la tête universelle via un conducteur central du câble coaxial. Ainsi, le port d'entrée 13 est agencé pour recevoir les signaux d'entrée S_e provenant de la tête universelle.

Le circuit frontal 11 comporte de plus un composant d'alimentation de tête universelle 14, qui fournit une tension d'alimentation V1 à la tête universelle via le conducteur central du câble coaxial. La tension d'alimentation V1 est une tension continue de +13V ou de +18V selon la polarisation choisie de l'antenne satellite.

Le composant d'alimentation de tête universelle 14 fournit de plus à la tête universelle des signaux de pilotage S_p pour piloter la tête universelle. Les signaux de pilotage S_p sont formés par une porteuse à 22kHz modulée en OOSK (pour *On-Off Shift Keying,* en anglais). Les signaux de pilotage S_p sont superposés à la tension d'alimentation V1. Les signaux de pilotage S_p comprennent des messages de commande de la tête universelle et des messages de statut. Les messages de commande contiennent notamment des messages de sélection de bande pour sélectionner la bande de réception prédéfinie dans laquelle sont transposés les signaux captés par l'antenne satellite.

Le composant d'alimentation de tête universelle 14 est alimenté par une alimentation à découpage 16, ici un convertisseur *Flyback.* L'alimentation à découpage 16 fournit une tension continue V2 de +12V au composant d'alimentation de tête universelle 14.

L'alimentation à découpage 16 comprend un module d'entrée 16a et un module de sortie 16b. Le module d'entrée 16a de l'alimentation à découpage 16 est positionné dans le circuit numérique 12, alors que le module de sortie 16b de l'alimentation à découpage 16 est positionné dans le circuit frontal 11.

Le module d'entrée 16a reçoit une tension continue V3 de +12V, et le module de sortie 16b produit la tension continue V2 de +12V. L'alimentation à découpage 16 fournit donc, sous la tension continue V2, le courant d'alimentation que requiert le fonctionnement du composant d'alimentation de tête universelle 14.

L'alimentation à découpage 16 intègre un premier transformateur 17. Un premier enroulement 17a du premier transformateur 17 est positionné dans le module de sortie 16b de l'alimentation à découpage 16 (soit dans le circuit frontal 11), alors qu'un deuxième enroulement 17b du premier transformateur 17 est positionné dans le module d'entrée 16a de l'alimentation à découpage 16 (soit dans le circuit numérique 12).

Une borne du premier enroulement 17a du premier transformateur 17 est connectée à la première masse électrique M1. Une borne du deuxième enroulement 17b du premier transformateur 17 est connectée à la deuxième masse électrique M2.

L'isolation galvanique entre le circuit frontal 11 et le circuit numérique 12, au niveau de l'alimentation à découpage 16, est donc réalisée par le premier transformateur 17.

Le composant d'alimentation de tête universelle 14 reçoit du circuit numérique 12 des signaux de commande qui commandent le fonctionnement du composant d'alimentation de tête universelle 14.

Les signaux de commande comprennent des signaux de gestion S_g du composant d'alimentation de tête universelle 14 et les signaux de pilotage S_p évoqués plus tôt.

Les signaux de pilotage S_p sont destinés à être transmis à la tête universelle par le composant d'alimentation de tête universelle 14.

Les signaux de gestion S_g sont transmis sur un bus I²C 19 (pour *Inter-Integrated Circuit,* en anglais) comprenant une ligne SDA 19a (pour *Serial Data Line,* en anglais) et une ligne SCL 19b (pour *Serial Clock Line,* en anglais).

Les signaux de gestion S_g sont transmis via deux premiers optocoupleurs 20 du dispositif de réception 10.

Les signaux de pilotage S_p sont transmis via un deuxième optocoupleur 21 du dispositif de réception 10.

Les premiers optocoupleurs 20 et le deuxième optocoupleur 21 permettent d'isoler galvaniquement le circuit frontal 11 et le circuit numérique 12. Une communication numérique est donc établie entre le circuit frontal 11 et le circuit numérique 12 du dispositif de réception 10 via les premiers optocoupleurs 20 et le deuxième optocoupleur 21.

Les premiers optocoupleurs 20 et le deuxième optocoupleur 21 présentent chacun une tension d'isolation de 2500V.

Le composant d'alimentation de tête universelle 14 applique la tension d'alimentation V1 et injecte les signaux de pilotage S_p sur le port d'entrée 13 via une inductance L1 et une capacité C1.

L'inductance L1 est une bobine d'arrêt (ou *choke coil,* en anglais), d'inductance 40nH et de courant de saturation égal à 4A. La capacité C1 est une capacité de découplage, de capacité 100pF et de tension de service 250V.

On note que le circuit frontal 11 comporte un éclateur à gaz 22 (ou GDT, pour *Gas Discharge Tube,* en anglais). L'éclateur à gaz 22 est monté entre le port d'entrée 13 et la première masse électrique M1. L'éclateur à gaz 22 présente une tension d'éclatement de 90V et est agencé pour absorber des pics de courant jusqu'à 2,5kA.

Le dispositif de réception 10 comporte de plus un deuxième transformateur 23.

Un premier enroulement 23a du deuxième transformateur 23 est positionné dans le circuit frontal 11. Un deuxième enroulement 23b du deuxième transformateur 23 est positionné dans le circuit numérique 12.

Une borne du premier enroulement 23a du deuxième transformateur 23 est connectée à la première masse électrique M1. Une borne du deuxième enroulement 23b du deuxième transformateur 23 est connectée à la deuxième masse électrique M2.

Une capacité C2 est montée en série entre le port d'entrée 13 et la borne du premier enroulement 23a du deuxième transformateur 23 qui n'est pas connectée à la première masse électrique M1.

La capacité C2 est une capacité de liaison dont la tension de service est adaptée à la tension présente sur le port d'entrée 13, et dont l'impédance est choisie pour correspondre à la bande passante des signaux captés par l'antenne satellite. La bande passante est typiquement comprise entre 950MHz et 2350MHz. La capacité C2 rejette par ailleurs la composante continue de la tension présente sur le port d'entrée 13, ainsi que la porteuse à 22KHz produite par le composant d'alimentation de tête universelle 14.

Les signaux d'entrée S_e sont appliqués aux bornes du premier enroulement 23a du deuxième transformateur 23.

Le circuit numérique 12 comporte quant à lui un port de sortie 26 et des composants de réception 27 qui acquièrent les signaux d'entrée S_e et les transforment en signaux de sortie S_s.

Les composants de réception 27 sont reliés au deuxième enroulement 23b du deuxième transformateur 23.

L'isolation galvanique entre le circuit frontal 11 et le circuit numérique 12, au niveau de la réception et de l'acquisition des signaux d'entrée S_e, est donc réalisée par le deuxième transformateur 23.

Les composants de réception 27 comportent un filtre passe-bande 28 et un récepteur 29 comprenant un tuner 30 et un démodulateur 31.

Le filtre passe-bande 28 est relié à la borne du deuxième enroulement 23b du deuxième transformateur 23 qui n'est pas connectée à la deuxième masse électrique M2.

Le filtre passe-bande 28 est ici un filtre d'ordre 5 et de réjection 20dB, qui laisse passer les signaux captés par l'antenne satellite ayant une fréquence comprise entre 950MHz et 2350MHz.

Le tuner 30 est relié à la sortie du filtre passe-bande 28. Le démodulateur 31 est relié à la sortie du tuner 30.

Le démodulateur 31 joue notamment le rôle d'un composant de commande qui produit les signaux de commande, c'est à dire les signaux de gestion S_g et les signaux de pilotage S_p.

Le démodulateur 31 transmet les signaux de gestion S_g par le bus I²C 19 au composant d'alimentation de tête universelle 14 via les premiers optocoupleurs 20.

Le démodulateur 31 transmet les signaux de pilotage S_p via le deuxième optocoupleur 21 au composant d'alimentation de tête universelle 14.

Le démodulateur 31 applique les signaux de sortie S_s sur le port de sortie 26.

On note par ailleurs que la première masse électrique M1 et la deuxième masse électrique M2 sont reliées par une capacité C3. La capacité C3 supporte de hautes tensions mais présente une faible impédance dans les hautes fréquences (typiquement entre 30Mz et 6GHz). La capacité C3 permet de maintenir une équipotentialité de la première masse électrique M1 et de la deuxième masse électrique M2 dans les hautes fréquences, pour satisfaire aux contraintes et exigences de compatibilité électromagnétique. La capacité C3 a ici une capacité de 180pF et une tension de service de 1000V.

Bien entendu, l'invention n'est pas limitée au mode de réalisation décrit mais englobe toute variante entrant dans le champ de l'invention telle que définie par les revendications.

On a ici indiqué que le dispositif de réception est intégré dans un boîtier décodeur qui est un décodeur de télévision. Le dispositif de réception peut cependant être relié à un équipement de destination autre qu'une télévision, et les signaux captés par l'antenne satellite peuvent être des signaux différents, par exemple des signaux de télécommunication ou de radio satellite.

Bien que l'on ait ici uniquement évoqué des signaux de pilotage, utilisant la porteuse à 22kHz, qui sont transmis par le boîtier décodeur à la tête universelle, cette communication peut être bidirectionnelle. La tête universelle peut aussi transmettre des données au boîtier décodeur en utilisant une porteuse à 22kHz.

Le dispositif de réception peut bien sûr comprendre des composants non décrits ici, et réaliser des fonctions non présentées. Par exemple, le dispositif de réception peut embarquer une électronique de pilotage d'équipements selon la norme DisecQl.x (communication unidirectionnelle) ou DisecQ2.x (communication bidirectionnelle).

## Revendications

1. Dispositif de réception de signaux captés par une antenne satellite, comprenant un circuit frontal (11) destiné à être connecté à une tête universelle montée sur l'antenne satellite et un circuit numérique (12) destiné à être connecté à un équipement de destination, le circuit frontal et le circuit numérique étant isolés galvaniquement l'un par rapport à l'autre par des moyens d'isolation, le circuit frontal (11) comportant une première masse électrique (M1), un port d'entrée (13) agencé pour recevoir des signaux d'entrée (S_e) provenant de la tête universelle, un composant d'alimentation de tête universelle (14), et un module de sortie (16b) d'une alimentation à découpage (16) du composant d'alimentation de tête universelle, le circuit numérique (12) comprenant une deuxième masse électrique (M2), un port de sortie (26), des composants de réception (27) agencés pour acquérir les signaux d'entrée, pour les transformer en signaux de sortie et pour appliquer les signaux de sortie sur le port de sortie, un module d'entrée (16a) de l'alimentation à découpage (16), et un composant de commande agencé pour produire des signaux de commande à destination du composant d'alimentation de tête universelle (14).

2. Dispositif de réception selon la revendication 1, dans lequel les moyens d'isolation comportent un premier enroulement (17a) et un deuxième enroulement (17b) d'un premier transformateur (17) intégré dans l'alimentation à découpage (16), le premier enroulement du premier transformateur étant positionné dans le module de sortie (16b) de l'alimentation à découpage et le deuxième enroulement du premier transformateur étant positionné dans le module d'entrée (16a) de l'alimentation à découpage.

3. Dispositif de réception selon la revendication 1, dans lequel les moyens d'isolation comportent un premier enroulement (23a) et un deuxième enroulement (23b) d'un deuxième transformateur (23), le premier enroulement du deuxième transformateur étant positionné dans le circuit frontal (11), le deuxième enroulement du deuxième transformateur étant positionné dans le circuit numérique (12), les signaux d'entrée (S e) étant appliqués aux bornes du premier enroulement du deuxième transformateur et le deuxième enroulement du deuxième transformateur étant connecté aux composants de réception (27).

4. Dispositif de réception selon la revendication 1, dans lequel les moyens d'isolation comprennent au moins un optocoupleur (20, 21) au travers duquel sont transmis les signaux de commande.

5. Dispositif de réception selon la revendication 4, dans lequel les signaux de commande comprennent des signaux de gestion (S_g) du composant d'alimentation de tête universelle (14) transmis via deux premiers optocoupleurs (20), et des signaux de pilotage (S_p) transmis via un deuxième optocoupleur (21), les signaux de pilotage étant destinés à être transmis à la tête universelle par le composant d'alimentation de tête universelle (14).

6. Dispositif de réception selon la revendication 5, dans lequel les signaux de pilotage (S_p) sont formés par une porteuse à 22kHz modulée en OOSK.

7. Boîtier décodeur comprenant un dispositif de réception selon l'une des revendications précédentes.

8. Boîtier décodeur selon la revendication 7, le boîtier décodeur étant un décodeur de télévision.

## Patentansprüche

1. Empfangsvorrichtung zum Empfang von Signalen, die von einer Satellitenantenne aufgefangen werden, umfassend eine Front-End-Schaltung (11), die dazu bestimmt ist, mit einem Universal-Kopf verbunden zu werden, der an der Satellitenantenne montiert ist, und eine digitale Schaltung (12), die dazu bestimmt ist, mit einer Zielausrüstung verbunden zu werden, wobei die Front-End-Schaltung und die digitale Schaltung durch Isolationsmittel galvanisch voneinander isoliert sind, wobei die Front-End-Schaltung (11) eine erste elektrische Masse (M1), einen Eingangsport (13), der ausgebildet ist, um Eingangssignale (S_e) zu empfangen, die aus dem Universal-Kopf stammen, eine Universal-Kopf-Versorgungskomponente (14) und ein Ausgangsmodul (16b) eines Schaltnetzteils (16) der Universal-Kopf-Versorgungskomponente umfasst, wobei die digitale Schaltung (12) eine zweite elektrische Masse (M2), einen Ausgangsport (26), Empfangskomponenten (27), die ausgebildet sind, um die Eingangssingale zu erfassen, um sie in Ausgangssignale zu transformieren und die Ausgangsignale an dem Ausgangsport anzulegen, ein Eingangsmodul (16a) des Schaltnetzteils (16) und eine Befehlskomponente umfasst, die ausgebildet ist, um Befehlssignale mit Ziel Universal-Kopf-Versorgungskomponente (14) zu erzeugen.

2. Empfangsvorrichtung nach Anspruch 1, bei der die Isolationsmittel eine erste Wicklung (17a) und eine zweite Wicklung (17b) eines ersten Transformators (17) umfassen, der in das Schaltnetzteil (16) integriert ist, wobei die erste Wicklung des ersten Transformators in dem Ausgangsmodul (16b) des Schaltnetzteils positioniert ist und die zweite Wicklung des ersten Transformators in dem Eingangsmodul (16a) des Schaltnetzteils positioniert ist.

3. Empfangsvorrichtung nach Anspruch 1, bei der die Isolationsmittel eine erste Wicklung (23a) und eine zweite Wicklung (23b) eines zweiten Transformators (23) umfassen, wobei die erste Wicklung des zweiten Transformators in der Front-End-Schaltung (11) positioniert ist, die zweite Wicklung des zweiten Transformators in der digitalen Schaltung (12) positioniert ist, die Eingangssignale (S_e) an den Klemmen der ersten Wicklung des zweiten Transformators angelegt werden und die zweite Wicklung des zweiten Transformators mit den Empfangskomponenten (27) verbunden wird.

4. Empfangsvorrichtung nach Anspruch 1, bei der die Isolationsmittel mindestens einen Optokoppler (20, 21) umfassen, durch den die Befehlssignale überragen werden.

5. Empfangsvorrichtung nach Anspruch 4, bei der die Befehlssignale Verwaltungssignale (S_g) zur Verwaltung der Universal-Kopf-Versorgungskomponente (14) umfassen, die über zwei erste Optokoppler (20) übertragen werden, und Steuersignale (S_p), die über einen zweiten Optokoppler (21) übertragen werden, wobei die Steuersignale dazu bestimmt sind, über die Universal-Kopf-Versorgungskomponente (14) zum Universal-Kopf überragen zu werden.

6. Empfangsvorrichtung nach Anspruch 5, bei der die Steuersignale (S_p) durch einen OOSK-modulierten 22-kHz-Träger gebildet werden.

7. Set-Top-Box, umfassend eine Empfangsvorrichtung nach einem der vorhergehenden Ansprüche.

8. Set-Top-Box nach Anspruch 7, wobei die Set-Top-Box ein Fernsehdecoder ist.

## Claims

1. A receiver device for receiving signals picked up by a satellite antenna, the receiver device comprising both a front-end circuit (11) for connecting to a universal head mounted on the satellite antenna and also a digital circuit (12) for connecting to destination equipment, the front-end circuit and the digital circuit being electrically isolated from each other by isolation means, the front-end circuit (11) having a first electrical ground (Ml), an input port (13) arranged to receive input signals (S_e) coming from the universal head, a universal head power supply component (14), and an output module (16b) of a switch mode power supply (16) for the universal head power supply component, the digital circuit (12) having a second electrical ground (M2), an output port (26), reception components (27) arranged to acquire the input signals, to transform them into output signals, and to apply the output signals to the output port, an input module (16a) of the switch mode power supply (16), and a control component arranged to produce control signals for the universal head power supply component (14).

2. A receiver device according to claim 1, wherein the isolation means comprise a first winding (17a) and a second winding (17b) of a first transformer (17) integrated in the switch mode power supply (16), the first winding of the first transformer being located in the output module (16b) of the switch mode power supply and the second winding of the first transformer being located in the input module (16a) of the switch mode power supply.

3. A receiver device according to claim 1, wherein the isolation means comprise a first winding (23a) and a second winding (23b) of a second transformer (23), the first winding of the second transformer being located in the front-end circuit (11), the second winding of the second transformer being located in the digital circuit (12), the input signals (S_e) being applied to the terminals of the first winding of the second transformer, and the second winding of the second transformer being connected to the reception components (27).

4. A receiver device according to claim 1, wherein the isolation means comprise at least one optocoupler (20, 21) via which the control signals are transmitted.

5. A receiver device according to claim 4, wherein the control signals comprise management signals (S_g) for managing the universal head power supply component (14), which management signals are transmitted via two first optocouplers (20), and command signals (S_p) transmitted via a second optocoupler (21), the command signals being for transmission to the universal head by the universal head power supply component (14).

6. A receiver device according to claim 5, wherein the command signals (S_p) are formed by an OOSK-modulated carrier at 22 kHz.

7. A decoder box including a receiver device according to any preceding claim.

8. A decoder box according to claim 7, the decoder box being a TV decoder.
